(19) **Europäisches Patentamt**

**European Patent Office**

**Office européen des brevets**

(11) **EP 1 223 652 A1**

(12) **EUROPÄISCHE PATENTANMELDUNG**

(43) Veröffentlichungstag:
17.07.2002 Patentblatt 2002/29

(51) Int Cl.⁷: **H02H 7/22**

(21) Anmeldenummer: **01810037.0**

(22) Anmeldetag: **16.01.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **ABB RESEARCH LTD.**
**8050 Zürich (CH)**

(72) Erfinder:
• **Stanimirov, Michael**
**5400 Baden (CH)**
• **Deck, Bernhard**
**79809 Weilheim (DE)**
• **Rueegg, Walter**
**5304 Endigen (CH)**
• **Rehtanz, Christian**
**5405 Baden-Dättwil (CH)**

(74) Vertreter: **ABB Patent Attorneys**
**c/o ABB Schweiz AG**
**Brown Boveri Strasse 6**
**5400 Baden (CH)**

(54) **Verfahren zum Lokalisieren eines Fehlers in einem Stromnetz**

(57) Zum Lokalisieren eines Fehlers in einem Stromnetz sind verschiedene Messpunkte (6, 8) vorgesehen, an welchen Strom und Spannung gemessen werden. Das Stromnetzwerk ist mit mindestens einer Spannungsquelle (1) mit bekannter Quellspannung verbunden, wobei die Impedanz (R1, L1) zwischen der Spannungsquelle (1) und zumindest einem der Messpunkte ermittelt wird. Wenn bei einem Störfall die Spannung unerwartet auf Null geht, so wird der gemessene Strom mit der vor dem Störfall bestimmten Impedanz (R1, L1) und der Quellspannung verglichen, um festzustellen, ob der Messpunkt in einem Kurzschlusspfad liegt. Daraus kann die relative Lage der Spannungsquelle (1), des Messpunkts und des Kurzschlusses bestimmt werden.

Fig. 1

EP 1 223 652 A1

**Beschreibung**

Technisches Gebiet

Die Erfindung betrifft ein Verfahren zum Lokalisieren eines Fehlers in einem Stromnetz, insbesondere bei einer Sammelschiene, gemäss Oberbegriff von Anspruch 1.

Stand der Technik

Konventionelle digitale Schutzvorrichtungen für Sammelschienen basieren in der Regel auf dem Kirchhoff'schen Gesetz und prüfen, ob die Summe ein- und ausgehender Ströme gleich Null ist, was jedoch keine zuverlässige Lokalisierung eines Fehlerorts erlaubt. Zusätzlich existieren Lösungen, bei denen Unterimpedanz-Messungen durchgeführt werden, was jedoch kaum möglich ist, wenn bei einer Störung die Spannung am jeweiligen Messort praktisch auf Null abfällt. Insbesondere wird in diesem Fall, vor allem bei Wechselstrom, eine Richtungsdetektion des Energieflusses und somit die Bestimmung des Fehlerorts schwierig.

Darstellung der Erfindung

Es ist deshalb Aufgabe der vorliegenden Erfindung, ein Verfahren der eingangs genannten Art zum Lokalisieren eines Fehlers, insbesondere eines Kurzschlusses, bereitzustellen, welches zumindest in einigen Situationen eine bessere Diagnose als die bestehenden Verfahren erlaubt.

Diese Aufgabe wird von Anspruch 1 gelöst.

Erfindungsgemäss werden beim Messpunkt im Normalbetrieb also ein Normalbetriebs-Strom und eine Normalbetriebs-Spannung gemessen. Aus diesen Grössen können, falls nötig, die Normalbetriebs-Impedanz und die Normalbetriebs-Quellspannung einer Spannungsquelle ermittelt werden. Hierzu können z.B. bei einer Laständerung die gemessenen Ströme und Spannungen zu den Zeitpunkten 1 (vorher) und 2 (nachher) nach folgender Formel verknüpft werden

$$Z = \frac{U_{Load}(t_2) - U_{Load}(t_1)}{I_{Load}(t_2) - I_{Load}(t_1)}.$$

$U_{Load}$ und $I_{Load}$ sind die gemessenen Zeiger bei der Nennfrequenz von 50 bzw. 60 Hz.

Geht die beim Messpunkt gemessene Spannung unerwartet (d.h. nicht im Rahmen ihres normalen Wechselspannungsverlaufs) gegen Null (d.h. fällt ihr Betrag unter einen Schwellwert ab, der es schwierig macht, aus Spannung und Strom zuverlässige Impedanzen zu ermitteln), so kann der Strom alleine für die Störfall-Analyse verwendet werden. Hierzu wird der Störfall-Strom gemessen und rechnerisch verglichen mit einem bei Normalbetriebs-Quellspannung durch die Normalbetriebs-Impedanz fliessenden Strom. Falls eine Korrespondenz dieser Werte vorliegt, kann gefolgert werden, dass der Messpunkt im Kurzschlusspfad liegt, d.h. die Relativposition zwischen der Spannungsquelle, dem Messpunkt und einem Kurzschlussort kann in diesem Fall festgelegt werden. Falls der Störfall-Strom nicht der Normalbetriebs-Quellspannung und der Normalbetriebs-Impedanz entspricht, kann je nach Topographie des Netzes z.B. gefolgert werden, dass entweder ein Messfehler vorliegt, oder dass ein Leitungsunterbruch oder Kurzschluss zwischen der Spannungsquelle und dem Messpunkt vorhanden ist.

Somit lassen sich mit dem erfindungsgemässen Verfahren also Informationen über die Relativpositionen der Spannungsquelle, des Messpunkts und eines Fehlerorts ermitteln.

Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:

     Fig. 1 eine mögliche Ausgestaltung eines Leitungsnetzes mit Sammelschiene zur Ausführung der Erfindung und

     Fig. 2 ein exemplarisches zweites Leitungsnetz mit zwei Spannungsquellen.

Wege zur Ausführung der Erfindung

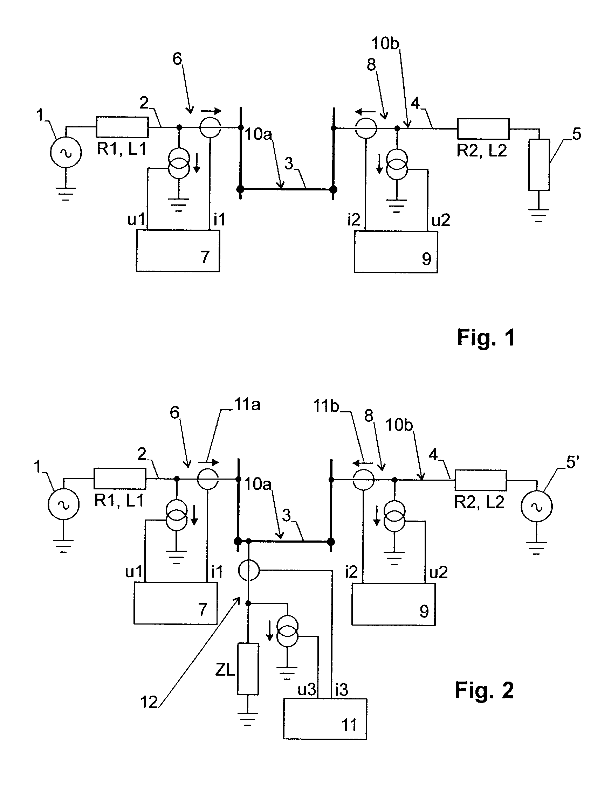

Eine mögliche Ausführung der Erfindung wird anhand der Leitungsgeometrie gemäss Fig. 1 illustriert. Diese Figur zeigt einen Teil eines Stromnetzes, insbesondere eines Wechselstromnetzes, zum Führen von Hoch- oder Mittelspannung einiger Kilovolt oder mehr. Der gezeigte Teil der Stromnetzes umfasst exemplarisch eine Spannungsquelle 1, die über eine Leitung 2 mit einer Sammelschiene 3 verbunden ist. An der Sammelschiene 3 ist weiter über eine Leitung 4 eine Last 5 angeordnet.

In der Figur sind ferner die Impedanzen als Widerstandswerte und Induktivitätswerte R1, L1 und R2, L2 dargestellt. R1, L1 beschreibt die innere Impedanz der Spannungsquelle 1 und die Impedanz der Leitung 2. R2, L2 beschreiben die Impedanz der Leitung 4. Bei den Abgriffen der Sammelschiene 3 ist für jede der Leitungen 2, 4 ein Messpunkt 6 bzw. 8 vorgesehen, an welchem je eine Messstation 7 bzw. 9 angeordnet ist. Beide Messstationen 7 bzw. 9 verfügen je über einen Strom- und einen Spannungssensor, um den Strom i1 bzw. i2 und die Spannung u1 bzw. u2 am jeweiligen Messpunkt zu messen.

Im Normalbetrieb des Netzes überwachen die Messstationen 7 bzw. 9 den Strom und die Spannung am jeweiligen Messpunkt. Die gemessenen Ströme an der Sammelschiene 3 können z.B. in bekannter Weise addiert werden, um Fehlströme im Bereich der Sammelschiene zu erkennen.

Weiter kann die erste Messstation 7 z.B. durch Messung des Verlaufs der Spannung u1 und des Stroms i1 den Wert der Impedanz R1, L1 und der Quellspannung us der Spannungsquelle 1 berechnen. Hierzu kann die folgende Beziehung verwendet werden:

$$us(t) = R1 \cdot i1(t) + L1 \cdot \frac{d}{dt} i1(t) + u1(t) \qquad (1)$$

Es ist jedoch auch möglich, dass die Impedanz $Z1 = R1 + j \cdot \omega \cdot L1$ und die Quellspannung us mittels anderer Messungen ermittelt werden. Die so ermittelte Quellspannung us bzw. die so ermittelte Impedanz R1, L1 im Normalbetrieb vor Auftreten eines im folgenden diskutierten Störfalls werden Normalbetriebs-Quell-spannung $us_n$ bzw. Normalbetriebs-Impedanz $R1_N$, $L1_N$ genannt. Die Normalbetriebs-Quellspannung $us_N$ ist dabei eine komplexe Grösse, die die Amplitude und Phase der Quellspannung angibt, d.h. im Normalfall gilt $us(t) = Re(us_N \cdot exp(j\omega t))$, wobei $\omega$ die Kreisfrequenz der Netz-frequenz ist.

Der Messaufbau nach Fig. 1 kann dazu verwendet werden, bei Auftreten eines Fehlers diesen Fehler zu lokalisieren. Dabei ist zu berücksichtigen, dass z. B. bei Zusammenbrechen der Spannung an einem Messpunkt auf den Wert 0 eine zuverlässige Impedanzmessung in der oben beschriebenen Weise nicht möglich ist. Auch ist es bei einem Wechselstromnetz unmöglich, nur aus einer Strommessung die Flussrichtung der elektrischen Energie zu bestimmen.

Wenn bei einem Störfall die an einem der Messpunkte 6, 8 gemessene Spannung gegen Null geht, d. h. wenn z.B. ihr Betrag ausserhalb des Nulldurchgangs unter einen gewissen Schwellwert fällt, so wird eine Prüfung eingeleitet. Diese umfasst die folgenden Schritte:

A: Es wird am jeweiligen Messpunkt 6, 8 der Strom i1 bzw. i2 gemessen. Dieser Strom wird im folgenden Störfall-Strom $i1_S$ bzw. $i2_S$ genannt.
B: Sodann wird rechnerisch geprüft, ob der Störfall-Strom $i1_S$ bzw. $i2_S$ mit einem bei der Normalbetriebs-Quellspannung $us_N$ durch die Normalbetriebs-Impedanz $Z1 = R1_N + j \cdot \omega \cdot L1_N$ fliessenden Strom übereinstimmt.
C: Aus der Prüfung nach Schritt B lassen sich Informationen über den Ort und die Art einer Störung gewinnen.

Diese Schritte sind im folgenden genauer erläutert.

In Schritt A werden die Amplitude und Phasen-lage des Störfall-Stroms $i1_s$ bzw. $i2_s$ gemessen. Hierzu kann der Stromsensor des jeweiligen Messpunktes verwendet werden.

Schritt B kann in verschiedenster Weise ausgeführt werden. Am Messpunkt 6 kann z.B. die folgende

Beziehung geprüft werden:

$$us_N(t) = R1_N \cdot i1_s(t) + L1_N \cdot \frac{d}{dt} i1_s(t). \qquad (2)$$

Dabei beschreibt die rechte Seite von Gleichung (2) den beim Störfall-Strom $i1_s$ auftretenden Spannungsabfall über der Normalbetriebs-Impedanz $R1_N$, $L1_N$. Dieser Spannungsabfall wird mit der (extrapolierten) Normalbetriebs-Quellspannung $us_N(t)$ verglichen.

Ist die Bedingung gemäss Gleichung (2) ungefähr erfüllt, so folgt, dass der gemessene Störfall-Strom $i1_S(t)$ ungefähr dem Strom entspricht, der fliessen würde, wenn die Spannungsquelle 1 über die Impedanz $Z1 = R1 + j \cdot \omega \cdot L1$ kurzgeschlossen wäre. Je nach Leitungsgeometrie und Messpunkt erlaubt dies eine Lokalisierung des Fehlers. Für die Leitungsgeometrie von Fig. 1 gilt z.B.:

- Ist Gleichung (2) für den Messpunkt 6 erfüllt, so liegt ein Kurzschluss gegen Erde vor, und zwar irgendwo zwischen Messpunkt 6 und Leitung 4, z.B. an Punkt 10a im Bereich der Sammelschiene 3. Mit anderen Worten liegt Messpunkt 6 somit zwischen der Spannungsquelle 1 und dem Kurzschluss. Durch Unterbrechen eines Schalters am Ort des Messpunkts 6 können Schädigungen also verhindert werden.
- Ist Gleichung (2) für den Messpunkt 6 nicht erfüllt, so können verschiedene andere Fehler vorliegen. Z.B. ist es denkbar, dass der Spannungssensor fehlerhaft arbeitet, oder dass ein Unterbruch in der Leitung 2 vorliegt.
- Ist Gleichung (2) für den Messpunkt 8 ungefähr erfüllt, so liegt ein Kurzschluss auf Leitung 4 vor, z.B. an Punkt 10b, beispielsweise wegen einer vergessenen Erdungsleine. In diesem Fall können durch Unterbrechen eines Schalters am Ort des Messpunkts 8 Schädigungen verhindert werden.
- Ist Gleichung (2) für den Messpunkt 8 nicht erfüllt, so kann z.B. wiederum ein Fehler im Spannungssensor oder ein Unterbruch in der Leitung 2 oder der Sammelschiene 3 vorliegen.

Aus den obigen Beispielen folgt also, dass, wenn Gleichung (2) erfüllt ist, ein Kurzschluss vorliegt, der durch Unterbrechen eines Schalters am jeweiligen Messpunkt unschädlich gemacht werden kann, d.h. der Messpunkt befindet sich im Kurzschlusspfad.

Dieses Prinzip wird im folgenden an einigen weiteren exemplarischen Beispielen illustriert.

In Fig. 2 wird ein Leitungsnetz mit zwei Spannungsquellen 1, 5' und einer an der Sammelschiene 3 angeordneten Last $Z_L$ gezeigt. Ereignet sich ein Kurzschluss im Bereich der Sammelschiene 3 zwischen den beiden Messpunkten 6, 8, z.B. am Ort 10a, so liegen beide Messpunkte in einem Kurzschlusspfad für die jeweilige Spannungsquelle. Für Messpunkt 6 ist Gleichung (2) erfüllt. Auch für Messpunkt 8 ist die entsprechende Gleichung für die zweite Normalbetriebs-Impedanz $R2_N$, $L2_N$ und die Normalbetriebs-Quellspannung u2sN der zweiten Spannungsquelle 5' erfüllt, d.h.

$$u2s_N(t) = R2_N \cdot i2_s(t) + L2_N \cdot \frac{d}{dt} i2_s(t). \qquad (3)$$

Ereignet sich in der Geometrie nach Fig. 2 ein Kurzschluss auf Leitung 4, z.B. am Ort 10b, so liegen beide Messpunkte 6, 8 im gleichen Kurzschlusspfad. Unter der vereinfachenden Voraussetzung annähernd gleicher Quellimpedanzen und Quellspannungen und bei einem verglichen mit dem Kurzschlussstrom geringen Strom durch Last ZL sind die Ströme an beiden Messpunkten 6, 8 gleich aber (aufgrund der Vorzeichendefinition, welche durch Pfeile 11a, 11b angedeutet wird) um 180° phasenverschoben. An Messpunkt 6 ist Gleichung (2) erfüllt. An Messpunkt 8 ist Gleichung (2) bis auf das Vorzeichen erfüllt, d.h. es gilt:

$$- us_N(t) = R1_N \cdot i1_s(t) + L1_N \cdot \frac{d}{dt} i1_s(t). \qquad (4)$$

Eine Überprüfung von Gleichung (4) kann z.B. am Messpunkt 8 durchgeführt werden, falls die Parameter $us_N$, $R1_N$ und $L1_N$ an diesen Messpunkt übermittelt werden.

Werden die Resultate der Prüfungen gemäss Gleichung (2), (3) und (4) an eine zentrale Koordinationseinheit übermittelt, so kann diese den Kurzschlusspfad ermitteln und bei einem Kurzschluss an Punkt 10b z.B. nur die Leitung 4 von der Sammelschiene trennen, so dass eine Versorgung der Last $Z_L$ über Leitung 2 gewährleistet bleibt.

Im Abgang zur Last $Z_L$ kann eine weitere Messstation 11 an einem weiteren Messpunkt 12 vorgesehen werden, wo eine Spannung u3 und ein Strom i3 gemessen werden. Fällt bei diesem Messpunkt die Spannung unerwartet auf Null ab, so wird wiederum ein Vergleich der Art von Gleichung (2) durchgeführt, nämlich

$$ut_N(t) = Rt_N \cdot i3_S(t) + Lt_N \cdot \frac{d}{dt} i3_s(t). \qquad (5)$$

In diesem Falle sind $ut_N$, $Rt_N$ bzw. $Lt_N$ die gemäss Thevenin-Theorem berechnete äquivalente Quellspannung und Impedanz des von den beiden Spannungsquellen 1, 5' und den Impedanzen R1, L1, R2, L2 gebildeten Netzwerks. Die Methoden zur Berechnung dieser Grössen aus kontinuierlichen Messungen sind dem Fachmann bekannt, z.B. aus US 5 631 569.

Die Gleichung (5) kann in gleicher Weise zu einer Prüfung herbeigezogen werden wie z.B. Gleichung (3).

Bezugszeichenliste

| | | |
|---|---|---|
| 1: | Spannungsquelle |
| 2: | erste Leitung |
| 3: | Sammelschiene |
| 4: | zweite Leitung |
| 5: | Last |
| 5': | zweite Spannungsquelle |
| 6: | erster Messpunkt |
| 7: | erste Messstation |
| 8: | zweiter Messpunkt |
| 9: | zweite Messstation |
| 10a, 10b: | Kurzschlussorte |
| 11: | dritte Messstation |
| 12: | dritter Messpunkt |
| i1: | Strom am ersten Messpunkt |
| i2: | Strom am zweiten Messpunkt |
| i3: | Strom am dritten Messpunkt |
| $i1_s$: | Strom am ersten Messpunkt im Störfall |
| $i2_s$: | Strom am zweiten Messpunkt im Störfall |
| $i3_s$: | Strom am dritten Messpunkt im Störfall |
| L1: | Induktivitätsanteil der ersten Impedanz |
| L2: | Induktivitätsanteil der zweiten Impedanz |
| $Lt_N$: | Induktivitätsanteil der äquivalenten Impedanz im Normalbetrieb |
| $L1_N$: | Induktivitätsanteil der ersten Impedanz im Normalbetrieb |
| $L2_N$: | Induktivitätsanteil der zweiten Impedanz im Normalbetrieb |
| u1: | Spannung am ersten Messpunkt |
| R1: | Widerstandsanteil der ersten Impedanz |
| R2: | Widerstandsanteil der zweiten Impedanz |
| $Rt_N$: | Widerstandsanteil der äquivalenten Impedanz im Normalbetrieb |
| $R1_N$: | Widerstandsanteil der ersten Impedanz im Normalbetrieb |
| $R2_N$: | Widerstandsanteil der zweiten Impedanz im Normalbetrieb |
| u2: | Spannung am zweiten Messpunkt |
| u3: | Spannung am zweiten Messpunkt |
| us: | Quellspannung der Spannungsquelle |
| $us_N$: | Quellspannung der Spannungsquelle im Normalbetrieb |
| u2s: | Quellspannung der zweiten Spannungsquelle |
| $us_N$: | Quellspannung der zweiten Spannungsquelle im Normalbetrieb |
| $ut_N$: | äquivalente Thevenin-Spannung im Normalbetrieb |
| $Z_L$: | Last |

Patentansprüche

1. Verfahren zum Lokalisieren eines Fehlers in einem Stromnetz, insbesondere bei einer Sammelschiene, bei welchem an mindestens einem Messpunkt (6, 8, 12) ein Strom (i1, i2, i3) und eine Spannung (u1, u2, u3) gemessen werden, **dadurch gekennzeichnet, dass** in einem Normalbetrieb die Normalbetriebs-Quellspannung ($us_N$, $u2s_N$, $ut_N$) einer Spannungsquelle (1, 5') und die Normalbetriebs-Impedanz ($R1_N$, $R2_N$, $Rt_N$, $L1_N$, $L2_N$, $Lt_N$) zwischen der Spannungsquelle (1, 5') und dem Messpunkt (6, 8, 12) ermittelt werden und dass, wenn in einem Störfall die gemessene Spannung (u1, u2, u3) unerwartet gegen Null geht, ein Störfall-Strom ($i1_S$, $i2_S$, $i3_S$) am Messpunkt (6, 8, 12) gemessen wird und rechnerisch geprüft wird, ob der Störfall-Strom ($i1_S$, $i2_S$, $i3_S$) mit einem bei Normalbetriebs-Quellspannung ($us_N$, $u2s_N$, $ut_N$) durch die Normalbetriebs-Impedanz ($R1_N$, $R2_N$, $Rt_N$, $L1_N$, $L2_N$, $Lt_N$) fliessenden Strom übereinstimmt und daraus mögliche Relativpositionen der Spannungsquelle, des Messpunkts und eines Fehlerorts bestimmt werden.

2. Verfahren nach Anspruch 1, **dadurch gekennzeichnet, dass** die Normalbetriebs-Quellspannung ($us_N$, $u2s_N$, $ut_N$) und die Normalbetriebs-Impedanz ($R1_N$, $R2_N$, $Rt_N$, $L1_N$, $L2_N$, $Lt_N$) aus dem gemessenen Strom (i1, i2, i3) und der gemessenen Spannung (u1, u2, u3) im Normalbetrieb ermittelt werden.

3. Verfahren nach einem der vorangehenden Ansprüche, **dadurch gekennzeichnet, dass** das Stromnetz Wechselstrom führt.

4. Verfahren nach einem der vorangehenden Ansprüche, **dadurch gekennzeichnet, dass** im Störfall ein beim Störfall-Strom ($i1_S$, $i2_S$, $i3_S$) auftretender Spannungsabfall über der Normalbetriebs-Impedanz ($R1_N$, $R2_N$, $Rt_N$, $L1_N$, $L2_N$, $Lt_N$) berechnet wird und der Spannungsabfall mit der Normalbetriebs-Quellspannung ($us_N$, $u2s_N$, $ut_N$) verglichen wird.

5. Verfahren nach einem der vorangehenden Ansprüche, **dadurch gekennzeichnet, dass**, wenn der Störfall-Strom ($i1_S$, $i2_S$, $i3_S$) mit einem bei Normalbetriebs-Quellspannung ($us_N$, $u2s_N$, $ut_N$) durch die Normalbetriebs-Impedanz fliessenden Strom übereinstimmt, gefolgert wird, dass der Messpunkt zwischen der Spannungsquelle und einem Kurzschlussort liegt.

6. Verfahren nach einem der vorangehenden Ansprüche, **dadurch gekennzeichnet, dass** das Stromnetz Hochoder Mittelspannung führt.

Fig. 1

Fig. 2

**Europäisches Patentamt**

## EUROPÄISCHER RECHERCHENBERICHT

Nummer der Anmeldung

EP 01 81 0037

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 604 037 A (FUJI ELECTRIC CO LTD) 29. Juni 1994 (1994-06-29) * Zusammenfassung * | 1 | H02H7/22 |
| | | | **RECHERCHIERTE SACHGEBIETE (Int.Cl.7)** |
| | | | H02H |

Der vorliegende Recherchenbericht wurde für alle Patentansprüche erstellt

| Recherchenort | Abschlußdatum der Recherche | Prüfer |
|---|---|---|
| DEN HAAG | 11. Juni 2001 | Salm, R |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

   .........................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 81 0037

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-06-2001

| Im Recherchenbericht angeführtes Patentdokument | Datum der Veröffentlichung | Mitglied(er) der Patentfamilie | Datum der Veröffentlichung |
|---|---|---|---|
| EP 0604037 A | 29-06-1994 | JP 6225448 A | 12-08-1994 |
| | | DE 69319561 D | 13-08-1998 |
| | | DE 69319561 T | 29-10-1998 |
| | | US 5566082 A | 15-10-1996 |

EPO FORM P0461

Für nähere Einzelheiten zu diesem Anhang : siehe Amtsblatt des Europäischen Patentamts, Nr.12/82